# EUROPÄISCHE PATENTSCHRIFT

(11) **EP 0 758 417 B1**
(45) Veröffentlichungstag und Bekanntmachung des Hinweises auf die Patenterteilung: **18.08.1999**
(21) Anmeldenummer: 95918601.6
(22) Anmeldetag: 25.04.1995
(51) Int. Cl.: D06P 1/54, D06P 1/607, D06P 1/52, C08G 18/28

(54) **VERWENDUNG VON HYDROPHIL MODIFIZIERTEN POLYISOCYANATEN IM TEXTILBEREICH**
USE OF HYDROPHILICALLY MODIFIED POLYISOCYANATES IN THE FIELD OF TEXTILES
UTILISATION DANS LE DOMAINE DES TEXTILES DE POLYISOCYANATES RENDUS HYDROPHILES PAR MODIFICATION

(30) Priorität: 03.05.1994 DE 4415449; 03.05.1994 DE 4415451; 25.08.1994 DE 4430165
(43) Veröffentlichungstag der Anmeldung: 19.02.1997
(73) Patentinhaber: BASF AKTIENGESELLSCHAFT, 67056 Ludwigshafen (DE)
(72) Erfinder: REICHERT, Jürgen, D-67059 Ludwigshafen (DE); FUCHS, Horst, D-67259 Heuchelheim (DE); HÄBERLE, Karl, D-67346 Speyer (DE); HUMMERICH, Rainer, D-67551 Worms (DE); REINCKE, Klaus, D-67157 Wachenheim (DE); BLAUTH, Manfred, D-67071 Ludwigshafen (DE)
(86) Internationale Anmeldenummer: EP9501552
(87) Internationale Veröffentlichungsnummer: WO9530045

(56) Entgegenhaltungen:
- EP-A- 0 212 511
- EP-A- 0 269 972
- EP-A- 0 377 434
- EP-A- 0 445 077
- EP-A- 0 510 438
- EP-A- 0 571 867
- AU-A- 2 711 377
- DE-A- 2 054 885
- DE-A- 3 109 978
- FR-A- 2 241 597
- US-A- 3 660 010
- US-A- 3 694 301
- US-A- 5 306 435
- DATABASE WPI Section Ch, Week 8712 Derwent Publications Ltd., London, GB; Class A87, AN 87-083177 & JP,A,62 033 879 ( SANYO CHEM IND LTD) , 13.Februar 1987

## Beschreibung

Die vorliegende Erfindung betrifft die Verwendung von hydrophil modifizierten Polyisocyanaten im Textilbereich.

In der DE-OS 17 19 545 (3) wird die Verwendung von Isocyanatgruppen enthaltenden Addukten von Diisocyanaten an Polyole zur Behandlung von Wolle beschrieben. Diese Isocyanatgruppen enthaltende Addukte werden hierbei ausschließlich als Lösungen in organischen Lösungsmitteln wie aromatischen organischen Lösungsmitteln, z.B. Benzol, Toluol oder Xylol, oder halogenierten aliphatischen organischen Lösungsmittel, z.B. Trichlorethylen, Perchlorethylen, Kohlenstofftetrachlorid oder Methylenchlorid, angewandt, was aus ökologischen Gründen und Gründen der Gesundheitsgefährdung äußerst nachteilig ist.

In den Beispielen der DE-OS 16 19 030 (4) und der DE-OS 17 69 121 (5) wird die Verwendung von Emulsionen von Addukten von überschüssigem Hexamethylendiisocyanat an höhermolekulares Polypropylenglykol zur Filzfreiausrüstung von Wolle beschrieben. Zur Emulgierung werden hierbei organische Lösungsmittel, z.B. Ethylacetat, sowie separate Emulgatoren, z.B. Paraffinsulfonate, benötigt, was zum einen zur Belastung der Abluft und zum anderen zu Problemen wie Abwasserbelastung oder Migration des Emulgators in der behandelten Ware führt.

Auch die US-A 3 847 543 (6) lehrt, Diisocyanate im Überschuß an Polyole zu addieren und mit Hilfe von organischen Lösungsmitteln, z.B. Toluol, und separaten Emulgatoren, z.B. Natriumlaurylsulfat, zu emulgieren und dann mit diesen Emulsionen textile Materialien zu behandeln.

In der DE-OS 41 34 284 (7) und der US-A 3 493 426 (8) wird die Verwendung von mit verschiedenen Blockierungsmitteln blockierten Isocyanaten zur Textilveredlung beschrieben. Bei dieser Anwendung muß durch thermische Abspaltung das Blockierungsmittel wieder entfernt werden, um den gewünschten Effekt zu erhalten. Nachteilig ist hierbei neben der erforderlichen Erhitzung des Textilmaterials besonders die Freisetzung des Blockierungsmittels.

Die vorliegende Erfindung betrifft die Verwendung von hydrophil modifizierten Polyisocyanaten zur Herstellung von Textilmaterialien mit waschpermanentem Glanz.

Den zugehörigen Stand der Technik stellen die Schriften (3) bis (8) dar.

Zur Erzeugung von Glanz insbesondere auf cellulosischen oder cellulosehaltigen Textilmaterialien werden üblicherweise Paraffin, Talg oder Polyethylen als Hilfsmittel aufgebracht. Oft werden dabei methylolgruppenhaltige Vernetzer, die leicht wieder Formaldehyd abspalten, mitverwendet. Bei derartigen Verfahren ist der erzeugte Glanz nicht waschpermanent. Bei der notwendigen thermischen Behandlung der Textilien, z.B. Kondensieren oder Fixieren, entstehen Abluftprobleme durch freigesetztes Paraffin und Formaldehyd.

Aufgabe der vorliegenden Erfindung war es daher, ein Verfahren zur Herstellung von Textilmaterialien mit waschpermanentem Glanz bereitzustellen, das folgenden Anforderungen genügt:
- die Anwendung soll ohne den Zusatz von organischen Lösungsmitteln und separaten Emulgatoren erfolgen;
- zur Anwendung sollen keine hohen Temperaturen notwendig sein;
- bei der Anwendung sollen keine Blockierungsmittel abgespalten werden müssen;
- die veredelten Textilmaterialien sollen darüber hinaus einen hohen Gebrauchswert aufweisen, insbesondere sollen sie ohne Glanzverlust waschbar sein;
- der waschpermanente Glanz soll ohne Paraffin- oder Formaldehydemissionen bei der thermischen Behandlung erzeugbar sein.

Demgemäß wurde die Verwendung von hydrophil modifizierten Polyisocyanaten für diesen Zweck gefunden.

Als Basis für die erfindungsgemäß verwendeten hydrophil modifizierten Polyisocyanate dienen übliche Diisocyanate und/oder übliche höher funktionelle Polyisocyanate mit einer mittleren NCO-Funktionalität von 2,0 bis 4,5. Diese Komponenten können alleine oder im Gemisch vorliegen.

Beispiele für übliche Diisocyanate sind aliphatische Diisocyanate wie Tetramethylendiisocyanat, Hexamethylendiisocyanat (1,6-Diisocyanatohexan), Octamethylendiisocyanat, Decamethylendiisocyanat, Dodecamethylendiisocyanat, Tetradecamethylendiisocyanat, Trimethylhexandiisocyanat oder Tetramethylhexandiisocyanat, cycloaliphatische Diisocyanate wie 1,4-, 1,3- oder 1,2-Diisocyanatocyclohexan, 4,4'-Di(isocyanatocyclohexyl)methan, 1-Isocyanato-3,3,5-trimethyl-5-(isocyanatomethyl)cyclohexan (Isophorondiisocyanat) oder 2,4- oder 2,6-Diisocyanato-1-methylcyclohexan sowie aromatische Diisocyanate wie 2,4- oder 2,6-Toluylendiisocyanat, Tetramethylxylylendiisocyanat, p-Xylylendiisocyanat, 2,4'- oder 4,4'-Diisocyanatodiphenylmethan, 1,3- oder 1,4-Phenylendiisocyanat, 1-Chlor-2,4-phenylendiisocyanat, 1,5-Naphthylendiisocyanat, Diphenylen-4,4'-diisocyanat, 4,4'-Diisocyanato-3,3'-dimethyldiphenyl, 3-Methyldiphenylmethan-4,4'-diisocyanat oder Diphenylether-4,4'-diisocyanat. Es können auch Gemische der genannten Diisocyanate vorliegen. Bevorzugt werden hiervon aliphatische Diisocyanate, insbesondere Hexamethylendiisocyanat und Isophorondiisocyanat.

Als übliche höher funktionelle Polyisocyanate eignen sich beispielsweise Triisocyanate wie 2,4,6-Triisocyanatotoluol oder 2,4,4'-Triisocyanatodiphenylether oder die Gemische aus Di-, Tri- und höheren Polyisocyanaten, die durch Phosgenierung von entsprechenden Anilin/Formaldehyd-Kondensaten erhalten werden und Methylenbrücken aufweisende Polyphenylpolyisocyanate darstellen.

Von besonderem Interesse sind übliche aliphatische höher funktionelle Polyisocyanate der folgenden Gruppen:
(a) Isocyanuratgruppen aufweisende Polyisocyanate von aliphatischen und/oder cycloaliphatischen Diisocyanaten. Besonders bevorzugt sind hierbei die entsprechenden Isocyanato-Isocyanurate auf Basis von Hexamethylendiisocyanat und Isophorondiisocyanat. Bei den vorliegenden Isocyanuraten handelt es sich insbesondere um einfache Tris-isocyanatoalkyl- bzw. Triisocyanatocycloalkyl-Isocyanurate, welche cyclische Trimere der Diisocyanate darstellen, oder um Gemische mit ihren höheren, mehr als einen Isocyanuratring aufweisenden Homologen. Die Isocyanato-Isocyanurate haben im allgemeinen einen NCO-Gehalt von 10 bis 30 Gew.-%, insbesondere 15 bis 25 Gew.-%, und eine mittlere NCO-Funktionalität von 2,6 bis 4,5.
(b) Uretdiondiisocyanate mit aliphatisch und/oder cycloaliphatisch gebundenen Isocyanatgruppen, vorzugsweise von Hexamethylendiisocyanat oder Isophorondiisocyanat abgeleitet. Bei Uretdiondiisocyanaten handelt es sich um cyclische Dimersierungsprodukte von Diisocyanaten.
(c) Biuretgruppen aufweisende Polyisocyanate mit aliphatisch gebundenen Isocyanatgruppen, insbesondere Tris(6-isocyanatohexyl)biuret oder dessen Gemische mit seinen höheren Homologen. Diese Biuretgruppen aufweisenden Polyisocyanate haben im allgemeinen einen NCO-Gehalt von 18 bis 25 Gew.-% und eine mittlere NCO-Funktionalität von 3 bis 4,5.
(d) Urethan- und/oder Allophanatgruppen aufweisende Polyisocyanate mit aliphatisch oder cycloaliphatisch gebundenen Isocyanatgruppen, wie sie beispielsweise durch Umsetzung von überschüssigen Mengen an Hexamethylendiisocyanat oder an Isophorondiisocyanat mit einfachen mehrwertigen Alkoholen wie Trimethylolpropan, Glycerin, 1,2-Dihydroxypropan oder deren Gemischen erhalten werden können. Diese Urethan- und/oder Allophanatgruppen aufweisenden Polyisocyanate haben im allgemeinen einen NCO-Gehalt von 12 bis 20 Gew.-% und eine mittlere NCO-Funktionalität von 2,5 bis 3.
(e) Oxadiazintriongruppen enthaltende Polyisocyanate, vorzugsweise von Hexamethylendiisocyanat oder Isophorondiisocyanat abgeleitet. Solche Oxadiazintriongruppen enthaltenden Polyisocyanate sind aus Diisocyanat und Kohlendioxid herstellbar.
(f) Uretonimin-modifizierte Polyisocyanate.

Für die erfindungsgemäße Verwendung werden aliphatische Diisocyanate und aliphatische höher funktionelle Polyisocyanate besonders bevorzugt.

Die beschriebenen Diisocyanate und/oder höher funktionalisierten Polyisocyanate werden zur Überführung in nicht-ionisch hydrophil modifizierte Polyisocyanate, die für die erfindungsgemäße Verwendung besonders bevorzugt werden, mit NCO-reaktiven Verbindungen umgesetzt, die hydrophil machende Strukturelemente mit nichtionischen Gruppen oder mit polaren Gruppen, die nicht in Ionengruppen übergeführt werden können, enthalten. Dabei liegt das Diisocyanat bzw. Polyisocyanat im stöchiometrischen Überschuß vor, damit das resultierende hydrophil modifizierte Polyisocyanat noch freie NCO-Gruppen aufweist.

Als solche NCO-reaktive Verbindungen mit hydrophil machenden Strukturelementen kommen vor allem hydroxylgruppenterminierte Polyether der allgemeinen Formel I

R¹-X-(AO)ₙ-H (I)

in der
- R¹: für C₁- bis C₂₀-Alkyl, insbesondere C₁- bis C₄-Alkyl, oder C₂- bis C₂₀-Alkenyl, Cyclopentyl, Cyclohexyl, Glycidyl, Oxethyl, Phenyl, Tolyl, Benzyl, Furfuryl oder Tetrahydrofurfuryl steht,
- X: Schwefel oder insbesondere Sauerstoff bezeichnet,
- A: Propylen oder vor allem Ethylen bedeutet, wobei auch insbesondere blockweise gemischt ethoxylierte und propoxylierte Verbindungen auftreten können, und
- n: für eine Zahl von 5 bis 120, insbesondere 10 bis 25 steht,
in Betracht.

Hierbei handelt es sich besonders bevorzugt um auf C₁- bis C₄-Alkanol gestartete Ethylenoxid- oder Propylenoxid-Polyether mit mittleren Molekulargewichten von 250 bis 7000, insbesondere 450 bis 1500.

Man kann aus den beschriebenen Diisocyanaten und/oder höher funktionalisierte Polyisocyanaten auch zuerst durch Umsetzung mit einem Unterschuß an hydroxylgruppenterminierten Polyestern, an anderen hydroxylgruppenterminierten Polyethern oder an Polyolen, z.B. Ethylenglykol, Trimethylolpropan oder Butandiol, Präpolymere erzeugen und diese Präpolymere dann anschließend oder auch gleichzeitig mit den Polyethern I im Unterschuß zu den hydrophil modifizierten Polyisocyanaten mit freien NCO-Gruppen umsetzen.

Es ist auch möglich, nicht-ionisch hydrophil modifizierte Polyisocyanate aus Diisocyanat bzw. Polyisocyanat und Polyalkylenglykolen der Formel HO-(AO)ₙ-H, in der A und n die oben genannten Bedeutungen haben, herzustellen. Dabei reagieren beide endständigen OH-Gruppen des Polyalkylenglykols mit Isocyanat ab.

Die aufgezählten Arten nicht-ionisch hydrophil modifizierter Polyisocyanate sind in den Schriften DE-A 24 47 135, DE-A 26 10 552, DE-A 29 08 844, EP-A 0 13 112, EP-A 019 844, DE-A 40 36 927, DE-A 41 36 618, EP-B 206 059, EP-A 464 781 und EP-A 516 361 näher beschrieben.

Die beschriebenen Diisocyanate und/oder höher funktionalisierten Polyisocyanate werden zur Überführung in anionisch hydrophil modifizierte Polyisocyanate mit NCO-reaktiven Verbindungen umgesetzt, die hydrophil machende anionische Gruppen, insbesondere Säuregruppen wie Carboxylgruppen, Sulfonsäuregruppen oder Phosphonsäuregruppen, enthalten. Dabei liegt das Diisocyanat bzw. Polyisocyanat im stöchiometrischen Überschuß vor, damit das resultierende hydrophil modifizierte Polyisocyanat noch freie NCO-Gruppen aufweist.

Als solche NCO-reaktiven Verbindungen mit anionischen Gruppen kommen vor allem Hydroxycarbonsäuren wie 2-Hydroxyessigsäure, 3-Hydroxypropionsäure, 4-Hydroxybuttersäure oder Hydroxylpivalinsäure sowie 2,2-Bis- und 2,2,2-Tris(hydroxymethyl)alkansäuren, z.B. 2,2-Bis(hydroxymethyl)essigsäure, 2,2-Bis(hydroxymethyl)propionsäure, 2,2-Bis (hydroxymethyl)buttersäure oder 2,2, 2-Tris(hydroxymethyl)essigsäure, in Betracht. Die Carboxylgruppen können teilweise oder vollständig durch eine Base neutralisiert sein, um in einer wasserlöslichen oder wasserdispergierbaren Form vorzuliegen. Als Base tritt hierbei vorzugsweise ein tertiäres Amin auf, welches bekanntermaßen gegenüber Isocyanat inert ist.

Die beschriebenen Diisocyanate und/oder höher funktionalisierten Polyisocyanate können auch mit einer Mischung aus nicht-ionisch hydrophil modifizierenden und anionisch hydrophobil modifizierenden Verbindungen, welche nacheinander oder gleichzeitig zugegeben werden, umgesetzt werden, beispielsweise mit einem Unterschuß aus den Polyethern I und den beschriebenen Hydroxycarbonsäuren.

Die aufgezählten Arten anionisch hydrophil modifizierter Polyisocyanate sind in den Schriften DE-A 40 01 783, DE-A 41 13 160 und DE-A 41 42 275 näher beschrieben.

Die beschriebenen Diisocyanate und/oder höher funktionalisierten Polyisocyanate werden zur Überführung in kationisch hydrophil modifizierte Polyisocyanate mit NCO-reaktiven Verbindungen umgesetzt, die chemisch eingebaute alkylierbare oder protonierbare Funktionen unter Ausbildung eines kationischen Zentrums enthalten. Insbesondere sind solche Funktionen tertiäre Stickstoffatome, welche bekanntermaßen gegenüber Isocyanat inert sind und sich leicht quaternieren oder protonieren lassen. Bei der Umsetzung von Diisocyanat bzw. Polyisocyanat mit diesen NCO-reaktiven Verbindungen liegen erstere im Überschuß vor, damit das resultierende hydrophil modifizierte Polyisocyanat noch freie NCO-Gruppen aufweist.

Als derartige NCO-reaktive Verbindungen mit tertiären Stickstoffatomen kommen vorzugsweise Aminoalkohole der allgemeinen Formel II 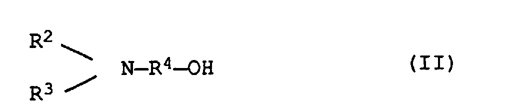 in der
- R² und R³: lineares oder verzweigtes C₁- bis C₂₀-Alkyl, insbesondere C₁- bis C₅-Alkyl, bedeuten oder zusammen mit dem N-Atom einen fünf- oder sechsgliedrigen Ring bilden, der noch ein O-Atom oder ein tertiäres N-Atom enthalten kann, insbesondere einen Piperidin-, Morpholin-, Piperazin-, Pyrrolidin-, Oxazolin- oder Dihydrooxazin-Ring, wobei die Reste R² und R³ noch zusätzlich Hydroxylgruppen, insbesondere jeweils eine Hydroxylgruppe, tragen können, und
- R⁴: eine C₂- bis C₁₀-Alkylengruppe, insbesondere eine C₂- bis C₆-Alkylengruppe, die linear oder verzweigt sein kann, bezeichnet,
in Betracht.

Als Aminoalkohole II eignen sich vor allem N-Methyldiethanolamin, N-Methyldi(iso)propanolamin, N-Butyldiethanolamin, N-Butyl-di(iso)propanolamin, N-Stearyldiethanolamin, N-Stearyl-di(iso)propanolamin, N,N-Dimethylethanolamin, N,N-Dimethyl(iso)propanolamin, N,N-Diethylethanolamin, N,N-Diethyl(iso)propanolamin, N,N-Dibutylethanolamin, N,N-Dibutyl(iso)propanolamin, Triethanolamin, Tri(iso)propanolamin, N-(2-Hydroxyethyl)morpholin, N-(2-Hydroxypropyl)morpholin, N-(2-Hydroxyethyl)piperidin, N-(2-Hydroxypropyl)piperidin, N-Methyl-N'-(2-hydroxyethyl)piperazin, N-Methyl-N'-(2-hydroxypropyl)piperazin, N-Methyl-N'-(4-hydroxybutyl)piperazin, 2-Hydroxyethyl-oxazolin, 2-Hydroxypropyl-oxazolin, 3-Hydroxypropyl-oxazolin, 2-Hydroxyethyl-dihydrooxazin, 2-Hydroxypropyl-dihydrooxazin oder 3-Hydroxypropyl-dihydrooxazin.

Weiterhin kommen als derartige NCO-reaktive Verbindungen mit tertiären Stickstoffatomen vorzugsweise Diamine der allgemeinen Formel IIIa oder IIIb 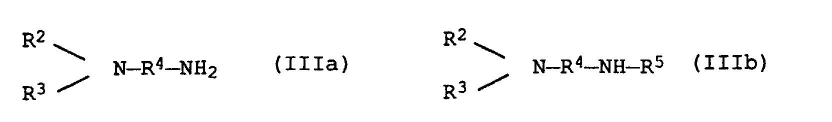 in der R² bis R⁴ die oben genannten Bedeutungen haben und R⁵ C₁- bis C₅-Alkyl bezeichnet oder mit R² einen fünf- oder sechsgliedrigen Ring, insbesondere einen Piperazin-Ring, bildet, in Betracht.

Als Diamine IIIa eigenen sich vor allem N,N-Dimethyl-ethylendiamin, N,N-Diethyl-ethylendiamin, N,N-Dimethyl-1,3-diamino-2,2-dimethylpropan, N,N-Diethyl-1,3-propylendiamin, N-(3-Aminopropyl)morpholin, N-(2-Aminopropyl)morpholin, N-(3-Aminopropyl)piperidin, N-(2-Aminopropyl)piperidin, 4-Amino-1-(N,N-diethylamino)pentan, 2-Amino-1-(N,N-dimethylamino)propan, 2-Amino-1-(N,N-diethylamino)propan oder 2-Amino-1-(N,N-diethylamino)-2-methylpropan.

Als Diamine IIIb eignen sich vor allem N,N,N'-Trimethyl-ethylendiamin, N,N,N'-Triethyl-ethylendiamin, N-Methylpiperazin oder N-Ethylpiperazin.

Weiterhin können als NCO-reaktive Verbindungen auch Polyether(poly)ole mit eingebauten tertiären Stickstoffatomen, die durch Propoxylierung und/oder Ethoxylierung von Aminstickstoff aufweisenden Startermolekülen herstellbar sind, eingesetzt werden. Derartige Polyether(poly)ole sind beispielsweise die Propoxylierungs- und Ethoxylierungsprodukte von Ammoniak, Ethanolamin, Diethanolamin, Ethylendiamin oder N-Methylanilin.

Andere verwendbare NCO-reaktive Verbindungen sind tertiäre Stickstoffatome aufweisende Polyester- und Polyamidharze, tertiäre Stickstoffatome aufweisende urethangruppenhaltige Polyole sowie tertiäre Stickstoffatome aufweisende Polyhydroxypolyacrylate.

Die beschriebenen Diisocyanate und/oder höher funktionalisierten Polyisocyanate können auch mit einer Mischung aus nicht-ionisch hydrophil modifizierenden und kationisch hydrophil modifizierenden Verbindungen, welche nacheinander oder gleichzeitig zugegeben werden, umgesetzt werden, beispielsweise mit einem Unterschuß aus den Polyethern I und den Aminoalkoholen II oder den Diaminen IIIa bzw. IIIb. Auch Mischungen aus nicht-ionisch hydrophil modifizierenden und anionisch hydrophil modifizierenden Verbindungen sind möglich.

Die aufgezählten Arten kationisch hydrophil modifizierter Polyisocyanate sind in den Schriften DE-A 42 03 510 und EP-A 531 820 näher beschrieben.

Der Gehalt der erfindungsgemäß verwendeten hydrophil modifizierten Polyisocyanate an hydrophil machenden Komponenten, die über ihre NCO-reaktiven Gruppen mit den beschriebenen Diisocyanaten und/oder höher funktionalisierten Polyisocyanaten zu den vorliegenden Produkten reagiert haben, beträgt in der Regel 0,1 bis 40 Gew.-%, vorzugsweise 0,5 bis 30 Gew.-%, insbesondere 1,0 bis 20 Gew.-%, bezogen auf das Gewicht des Produktes. Wenn es sich um rein nicht-ionisch hydrophil modifizierte Polyisocyanate handelt, beträgt dieser Gehalt in der Regel 1 bis 40 Gew.-%, vorzugsweise 3 bis 30 Gew.-%, insbesondere 5 bis 20 Gew.-%, handelt es sich dagegen um rein anionisch oder kationisch hydrophil modifizierte Polyisocyanate, beträgt dieser Gehalt in der Regel 0,1 bis 10 Gew.-%, vorzugsweise 0,5 bis 7 Gew.-%, insbesondere 1,0 bis 3 Gew.-%.

Bezogen auf die Menge an freien NCO-Gruppen im vorliegenden Produkt beträgt der Anteil an hydrophil machenden Komponenten in der Regel 0,5 bis 300 Gew.-%, vorzugsweise 2 bis 200 Gew.-%, insbesondere 5 bis 120 Gew.-%. Wenn es sich um rein nicht-ionisch hydrophil modifizierte Polyisocyanate handelt, beträgt dieser Anteil in der Regel 5 bis 300 Gew.-%, vorzugsweise 15 bis 200 Gew.-%, insbesondere 30 bis 120 Gew.-%, handelt es sich dagegen um rein anionisch oder kationisch hydrophil modifizierte Polyisocyanate, beträgt dieser Anteil in der Regel 0,5 bis 50 Gew.-%, vorzugsweise 2 bis 25 Gew.-%, insbesondere 5 bis 10 Gew.-%.

Da die genannten hydrophil modifizierten Polyisocyanate in wäßrigen Medien eingesetzt werden können, ist für eine ausreichende Dispergierbarkeit der Polyisocyanate zu sorgen. Vorzugsweise wirken innerhalb der Gruppe der beschriebenen hydrophil modifizierten Polyisocyanate bestimmte Umsetzungsprodukte aus Di- bzw. Polyisocyanate und hydroxylgruppenterminierten Polyethern (Polyetheralkoholen) wie die Verbindungen I als Emulgatoren für diesen Zweck.

Die erzielten guten Ergebnisse sind um so überraschender, da zu erwarten war, daß Isocyanate sich in dem verwendeten wäßrigen Milieu rasch zersetzen. Trotzdem weisen die erfindungsgemäß eingesetzten Polyisocyanate in der wäßrigen Flotte eine Topfzeit von mehreren Stunden auf, d.h. die vorliegenden Polyisocyanat-Dispersionen sind im Rahmen der üblichen Verarbeitungsdauer stabil.

Die beschriebenen hydrophil modifizierten Polyisocyanate werden für den beschriebenen Zweck in vielen Fällen in unverdünnter, d.h. in nicht dispergierter oder nicht gelöster Form eingesetzt. In anderen Fällen werden sie erst im Textilbehandlungsbad, z.B. im Färbebad dispergiert oder emulgiert, d.h. unmittelbar vor dem Kontakt mit dem zu behandelnden Textilmaterial.

Als Textilmaterialien, die mit waschpermanentem Glanz versehen werden sollen, können prinzipiell jegliche Materialien natürlicher oder synthetischer Herkunft verwendet werden, beispielsweise cellulosische Materialien, d.h. Textilien aus Baumwolle oder auch aus regenerierter Cellulose, Materialien aus Polyamid-, Polyurethan-, Polyester-, Polycarbonat-, Polyacrylnitril- oder Polypropylenfasern oder keratinfaserhaltige Textilmaterialien wie Schafswolle sowie Mischungen der genannten Materialien. Bevorzugt wird für die erfindungsgemäße Verwendung jedoch cellulosisches oder cellulosehaltiges Textilmaterial.

Die erfindungsgemäße Verwendung betrifft nicht nur die genannten Textilmaterialien in Form von Meterware oder Fertigware, sondern auch in vielen Fällen die Faser- oder Garnform dieser Materialien.

Die erfindungsgemäße Herstellung von Textilmaterialien mit waschpermanentem Glanz wird in der Regel so durchgeführt, daß das zu behandelnde Material mit den beschriebenen hydrophil modifizierten Polyisocyanaten und einer üblichen für diesen Zweck geeigneten Polymerdispersion, vorzugsweise einer üblichen Polyurethandisperion, insbesondere einer Polyesterpolyurethandispersion, mittels gängiger Auftragstechniken behandelt wird. Die verwendete Polymerdispersion trägt normalerweise keine mit dem Textilmaterial reagierenden Gruppen. Das Gew.-Verhältnis von Polymerdispersion zu hydrophil modifizierten Polyisocyanaten beträgt, bezogen auf die eingesetzten reinen Polymergehalte, in der Regel 20:1 bis 1:1, insbesondere 10:1 bis 1,5:1, vor allem 7:1 bis 2:1.

Die Erzeugung des Glanzes erfolgt zweckmäßigerweise durch Pressen, Kalandern, Prägen oder verwandte Techniken. Insbesondere die Verwendung von Kalandern, speziell von Chintzkalandern, hat sich als besonders vorteilhaft erwiesen. Chintzkalander sind Friktionskalander, d.h. die obere glatte, hochglanzpolierte und heizbare Walze hat eine höhere Umdrehungsgeschwindigkeit als die darunterliegende Weichwalze. Durch die Friktionswirkung (Druck- und Bügelwirkung) erhält die Ware hohen Glanz. Oft läuft unter der Weichwalze noch eine dritte Walze, die die Weichwalze kühlt.

Die Menge an hydrophil modifiziertem Polyisocyanat beträgt bei der erfindungsgemäßen Verwendung in der Regel 0,01 bis 50 Gew.-%, insbesondere 0,05 bis 20 Gew.-%, vor allem 0,1 bis 5 Gew.-%, bezogen auf das Gewicht des trockenen Textilmaterials.

Durch die erfindungsgemäße Verwendung der beschriebenen hydrophil modifizierten Polyisocyanate erhält man Textilmaterialien mit hochwaschpermanentem Glanz, welcher nicht nur waschbeständig unter den üblichen Bedingungen für die Textilwäsche in wäßriger Flotte sondern meist auch chemisch reinigungsbeständig ist. Normalerweise werden bei der chemischen Reinigung die oleophilen Anteile auf oder in den Textilien herausgelöst, was den Verlust des Glanzes zur Folge hat.

Weiterhin sind die so hergestellten Textilien normalerweise paraffin- und formaldehydfrei und bergen keine ökologischen Probleme durch Ausdünstigungen in sich.

Die Prozentangaben in den nachfolgenden Beispielen beziehen sich stets auf das Gewicht.

### Beispiele

### Synthesebeispiele

### Polyisocyanat 1 (nichtionisch modifiziert)

1000 g eines durch Trimerisierung eines Teiles der Isocyanatgruppen von 1,6-Diisocyanatohexan hergestellten, Isocyanuratgruppen aufweisendes Polyisocyanats, welches im wesentlichen aus Tris-(6-isocyanatohexyl)-isocyanurat und dessen höheren Homologen bestand, mit einem NCO-Gehalt von 22,2 %, einem Gehalt an monomerem Diisocyanat von weniger als 0,3 %, einer Viskosität bei 23°C von 1,9 Pas und einer mittleren NCO-Funktionalität von ca. 3,3 wurden auf 50°C erhitzt. Dazu gab man 80,8 g eines auf 50°C erhitzten monofunktionellen, auf n-Butanol gestarteten Polyethylenoxid-Polyethers mit einem Molgewicht von 1120 g/mol. Man erwärmte auf 110°C und rührte 2,5 h. Nach Abkühlen erhielt man ein klares Harz mit einem NCO-Gehalt von 18,9 % und einer Viskosität bei 23°C von 2700 mPas.

### Polyisocyanat 2 (nichtionisch modifiziert)

Zu 150 g (0,3 mol) eines auf Methanol gestarteten, monofunktionellen Polyethylenoxid-Polyethers mit einem Molekulargewicht von 500 g/mol wurden bei 60°C 25 g (0,15 mol) Hexamethylendiisocyanat gegeben und 30 min gerührt. Nach dieser Zeit betrug der NCO-Gehalt < 0,05 %. Dann wurde auf 30°C gekühlt und es wurden 900 g eines Biuretpolyisocyanats auf Basis von Hexamethylendiisocyanat, welches im wesentlichen aus N,N',N"-Tris-(6-isocyanatohexyl)-biuret und dessen höheren Homologen bestand, mit einem NCO-Gehalt von 21,9 %, einem Gehalt an monomerem Hexamethylendiisocyanat von weniger als 0,5 %, einer Viskosität bei 23°C von 2,9 Pas und einer mittleren NCO-Funktionalität von 3,3 eingerührt. Nach Abkühlen erhielt man ein klares Harz mit einem NCO-Gehalt von 18,1 % und einer Viskosität bei 23°C von 3900 mPas.

### Polyisocyanat 3 (nichtionisch/kationisch modifiziert)

600 g eines durch Trimerisierung eines Teiles der Isocyanatgruppen von 1,6-Diisocyanatohexan hergestellten, Isocyanuratgruppen aufweisendes Polyisocyanurats, welches im wesentlichen aus Tris-(6-isocyanatohexyl)-isocyanurat und dessen höheren Homologen bestand, mit einem NCO-Gehalt von 22,2 %, einem Gehalt an monomeren Diisocyanat von weniger als 0,3 %, einer Viskosität bei 23°C von 1,9 Pas und einer mittleren NCO-Funktionalität von ca. 3,3 wurden auf 50°C erhitzt. Dazu gab man 100 g eines auf 50°C erhitzten monofunktionellen, auf Methanol gestarteten Polyethylenoxid-Polyethers mit einem Molgewicht von 500 g/mol. Man erwärmte auf 110°C und rührte 1 h. Dann setzte man 7,9 g (0,1 mol) Dimethylethanolamin zu und rührte nochmals 1 h. Nach Abkühlen erhielt man ein klares Harz mit einem NCO-Gehalt von 15,0 % und einer Viskosität bei 23°C von 9000 mPas.

### Polyisocyanat 4 (kationisch modifiziert)

600 g eines durch Trimerisierung eines Teiles der Isocyanatgruppen von 1,6-Diisocyanatohexan hergestellten, Isocyanuratgruppen aufweisendes Polyisocyanurats, welches im wesentlichen aus Tris-(6-isocyanatohexyl)-isocyanurat und dessen höheren Homologen bestand, mit einem NCO-Gehalt von 22,2 %, einem Gehalt an monomerem Diisocyanat von weniger als 0,3 %, einer Viskosität bei 23°C von 1,9 Pas und einer mittleren NCO-Funktionalität von ca. 3,3 wurden auf 50°C erhitzt. Dazu gab man 7,9 g (0,1 mol) Dimethylethanolamin zu und rührte 1 h. Nach Abkühlen erhielt man ein klares Harz mit einem NCO-Gehalt von 19,55 % und einer Viskosität bei 23°C von 4700 mPas.

### Anwendungsbeispiel

Baumwollgewebe wurde auf einen Chintzkalander bei 190°C und 250 dN/cm (Stahlwalze/Polyamidwalze) mit einer Mischung aus einem handelsüblichen Polyesterpolyurethan (60 g/l, als 40 %ige Dispersion; Perapret^{®} PU der Fa. BASF Aktiengesellschaft) und dem hydrophil modifizierten Polyisocyanat 1 aus den obigen Synthese-beispielen (10 g/l im Bad) imprägniert. Die Menge an hydrophil modifizierten Polyisocyanat betrug dabei 0,6 %, bezogen auf das Gewicht des trockenen Textilmaterials. Die Flottenaufnahme der Mischung betrug 60 %. Anschließend wurde das Gewebe bei 110°C auf ca 10 % Restfeuchte getrocknet.

Der erzeugte Glanz auf dem Gewebe bleibt nach einer üblichen Textilwäsche voll erhalten.

Zum Vergleich wurde gleiches Baumwollgewebe unter gleichen Bedingungen mit einer handelsüblichen Rindertalgdispersion oder Paraffindispersion (40 g/l, als 35 %ige Dispersion) imprägniert und getrocknet. Der erzeugte Glanz verschwand nach einer üblichen Textilwäsche.

## Patentansprüche

1. Verwendung von hydrophil modifizierten Polyisocyanaten im Textilbereich zur Herstellung von Textilmaterialien mit waschpermanentem Glanz.

2. Verwendung nach Anspruch 1 von hydrophil modifizierten Polyisocyanaten auf Basis von aliphatischen Diisocyanaten und aliphatischen höher funktionellen Polyisocyanaten.

3. Verwendung nach Anspruch 1 oder 2 von nicht-ionisch hydrophil modifizierten Polyisocyanaten.

4. Verwendung nach Anspruch 3 von nicht-ionisch hydrophil modifizierten Polyisocyanaten, welche hydroxylgruppenterminierte Polyether der allgemeinen Formel I
R¹ X (AO)ₙ H (I)
in der
R¹ für C₁- bis C₂₀-Alkyl oder C₂- bis C₂₀-Alkenyl, Cyclopentyl, Cyclohexyl, Glycidyl, Oxethyl, Phenyl, Tolyl, Benzyl, Furfuryl oder Tetrahydrofurfuryl steht,
X Schwefel oder Sauerstoff bezeichnet,
A Propylen und/oder Ethylen bedeutet und
n für eine Zahl von 5 bis 120 steht,
eingebaut enthalten.

5. Verwendung nach den Ansprüchen 1 bis 4 zur Herstellung von cellulosischem oder cellulosehaltigem Textilmaterial mit waschpermanentem Glanz.

## Claims

1. Use of hydrophilically modified polyisocyanates in the textile sector for producing textile materials having a wash-resistant gloss.

2. Use as claimed in claim 1 of hydrophilically modified polyisocyanates based on aliphatic diisocyanates and aliphatic higher-functional polyisocyanates.

3. Use as claimed in claim 1 or 2 of nonionic hydrophilically modified polyisocyanates.

4. Use as claimed in claim 3 of nonionic hydrophilically modified polyisocyanates which contain, in built-in form, hydroxyl-terminated polyethers of the general formula I
R¹-X-(AO)ₙ-H (I)
where
R1 is C₁-C₂₀-alkyl or C₂-C₂₀-alkenyl, cyclopentyl, cyclohexyl, glycidyl, hydroxyethyl, phenyl, tolyl, benzyl, furfuryl or tetrahydrofurfuryl,
X is sulfur or oxygen,
A is propylene and/or ethylene and
n is a number from 5 to 120.

5. Use as claimed in claims 1 to 4 for producing a cellulosic or cellulose-containing textile material having a wash-resistant gloss.

## Revendications

1. Utilisation de polyisocyanates modifiés pour être hydrophiles dans le domaine du textile, pour la préparation de matières textiles ayant un lustre résistant au lavage.

2. Utilisation selon la revendication 1 de polyisocyanates modifiés pour être hydrophiles, à base de diisocyanates aliphatiques et de polyisocyanates aliphatiques à fonctionnalité plus élevée.

3. Utilisation selon la revendication 1 ou 2 de polyisocyanates non ioniques modifiés pour être hydrophiles.

4. Utilisation selon la revendication 3 de polyisocyanates non ioniques modifiés pour être hydrophiles, contenant de façon liée des polyéthers à groupements hydroxy terminaux de formule générale I
R¹ X (AO)ₙ H (I)
dans laquelle
R¹ représente un groupement alkyle en C₁-C₂₀ ou alcényle en C₂-C₂₀, cyclopentyle, cyclohexyle, glycidyle, oxyéthyle, phényle, tolyle, benzyle, furfuryle ou tétrahydrofurfuryle,
X représente un atome de soufre ou d'oxygène,
A représente un groupement propylène et/ou éthylène et
n est mis pour un nombre de 5 à 120.

5. Utilisation selon l'une quelconque des revendications 1 à 4, pour la préparation de matières textiles cellulosiques ou contenant de la cellulose ayant un lustre résistant au lavage.
